**Europäisches Patentamt**

**European Patent Office**

**Office européen des brevets**

(19)

(11) Veröffentlichungsnummer : **0 462 058 A1**

## (12) EUROPÄISCHE PATENTANMELDUNG

(21) Anmeldenummer : **91810413.4**

(22) Anmeldetag : **31.05.91**

(51) Int. Cl.⁵ : **F16B 37/04, // B61D17/04**

(30) Priorität : **15.06.90 CH 2014/90**

(43) Veröffentlichungstag der Anmeldung :
**18.12.91 Patentblatt 91/51**

(84) Benannte Vertragsstaaten :
**AT BE CH DE DK ES FR GB IT LI NL SE**

(71) Anmelder : **ALUSUISSE-LONZA SERVICES AG**
**Feldeggstrasse 4**
**CH-8034 Zürich (CH)**

(72) Erfinder : **Ritzl, Antal**
**Albisriederstrasse 363**
**CH-8047 Zürich (CH)**

(54) **Befestigungsvorrichtung.**

(57)   Die Befestigungsvorrichtung besteht aus einem C-Profilansatz (2) und einer darein eingeschobenen Klemmbride (12) mit einer eingesetzten Schraube (13). Die gegeneinander gerichteten Leisten (4) des Ansatzes (2) sind gegen den Schlitz (5) hin innenseitig verdickt. Die Bride (12) hintergreift diese Verdickung (7). Damit wird ein Spreizen der Schenkel (3) des Ansatzes (2) verhindert. Um die Bride (12) gegen Verschiebung längs des Profils (1) zu sichern, hat sie Querstege (30), die mit einer Kante (31) in die Verdickungen (7) beim Anziehen einer Mutter auf der Schraube (13) eindringen und damit eine formschlüssige Verbindung zwischen Bride (12) und Profil (1) auch in Profillängsrichtung herstellen. Die Befestigung eignet sich vor allem für die Unterflurbefestigung von Geräten an Schienenfahrzeugen.

Fig. 2

EP 0 462 058 A1

Fig. 5

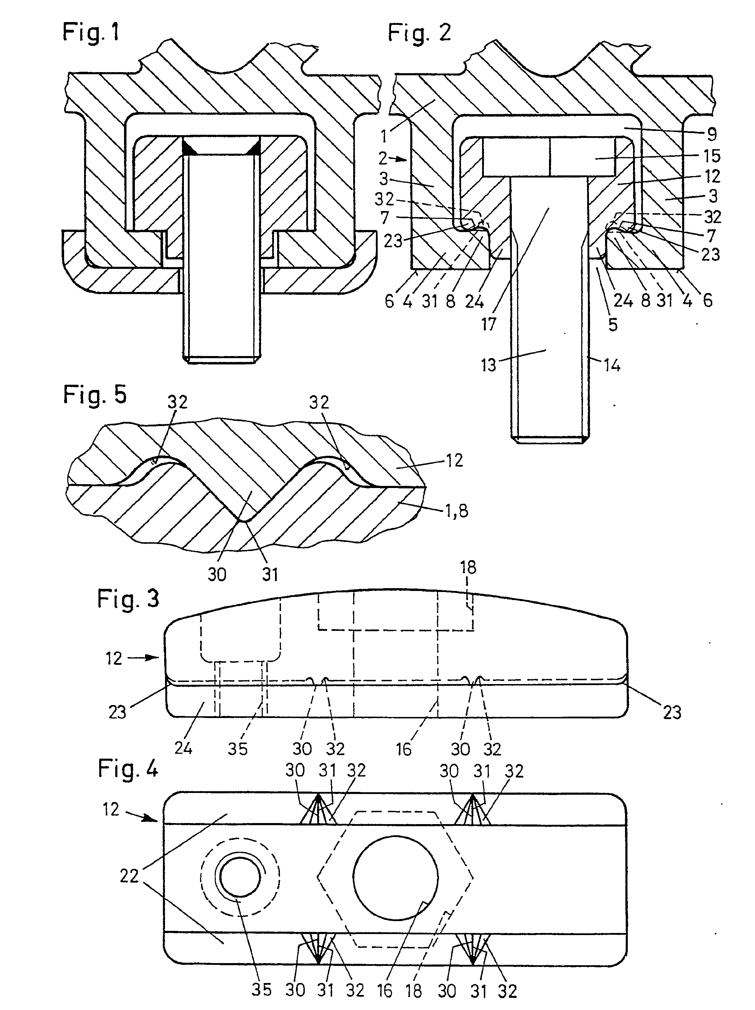

In Integralbauweise hergestellte Schienenfahrzeuge haben häufig eine Bodenplatte, die als stranggepresstes Fachwerk-Hohlprofil ausgebildet ist und in Längsrichtung des Fahrzeuges verläuft. Zur Unterflur-Befestigung von Geräten sind an diesen Hohlprofilen C-Profilansätze angeformt, in welche Klemmbriden mit abstehenden, eingeschweissten Gewindestangen eingeschoben werden. Um ein Spreizen der Schenkel des C-Profilansatzes beim Anziehen einer auf die Gewindestange aufgeschraubten Mutter zu vermeiden, wird von aussen über die Gewindestangen eine U-Schiene geschoben. Figur 1 zeigt eine durch Vorbenutzung bekannte derartige Befestigung. Diese Befestigung kann in Längsrichtung des Hohlprofils nur relativ bescheidene Kräfte übertragen. Insbesondere bei Schienenfahrzeugen ist dies nachteilig, weil hier in Fahrzeuglängsrichtung beim Rangieren Beschleunigungen bis 5 g auftreten können.

Der vorliegenden Erfindung liegt die Aufgabe zugrunde, eine Befestigungsvorrichtung zu schaffen, die grössere Kräfte in Profillängsrichtung übertragen kann. Diese Aufgabe wird durch die kennzeichnenden Merkmale des Anspruchs 1 gelöst.

Nachfolgend wird ein Ausführungsbeispiel der Erfindung anhand der Figuren 2 bis 5 erläutert. Darin zeigt:

Fig. 2 einen Querschnitt durch eine erfindungsgemässe Befestigungsvorrichtung,

Fig. 3 eine Seitenansicht einer Klemmbride,

Fig. 4 eine Ansicht von unten der Bride nach Fig. 3, und

Fig. 5 einen Detailquerschnitt durch einen Quersteg nach erfolgtem Anziehen der Befestigung.

In Figur 2 ist ein Querschnitt durch eine erfindungsgemässe Befestigungsvorrichtung dargestellt. An einem Strangpressprofil 1 aus einer Aluminiumlegierung ist ein C-Profilansatz 2 angeformt. Der Ansatz 2 besteht aus zwei vom Grund des Profils 1 abstehenden Stegen 3 und zwei von den Stegen 3 gegeneinander abstehenden Leisten 4, die zwischen sich einen Schlitz 5 freilassen. Die Leisten 4 haben eine in einer gemeinsamen Ebene liegende Aussenseite 6, die als Anlagefläche für ein zu befestigendes Gerät dient, z.B. einen Batteriekasten an der Unterseite eines Schienenfahrzeuges. Die Innenseite 7 der Leisten 4 ist gegenüber der Aussenseite 6 gegen den Schlitz 5 hin nach innen oben geneigt, so dass sich gegen den Schlitz 5 hin eine Verdickung 8 bildet.

In der durch den Ansatz 2 gebildeten T-Nut 9 ist eine Klemmbride 12 mit einer eingesetzten Sechskantschraube 13 mit Gewinde 14 und Schraubenkopf 15 eingeschoben. Die Bride 12 ist in Figur 3 und 4 detaillierter dargestellt. Sie besteht aus gesenkgeschmiedetem Stahl und hat in der Mitte eine Durchgangsbohrung 16 zur Aufnahme des Schraubenschaftes 17 sowie oben eine Sechskant-Ansenkung 18 zur drehsicheren Aufnahme des Schraubenkopfes 15. Die zur Anlage an die Innenseiten 7 ausgebildeten Anlageflächen 22 der Bride 12 haben die gleiche Neigung gegeneinander wie die Innenseiten 7. Dadurch wird an der Bride 12 beidseitig ein Randwulst 23 gebildet, dessen Rand abgerundet ist, um Spannungsspitzen im Ansatz 2 zu vermeiden. Die Bride 12 hat nach unten einen in den Schlitz 5 ragenden und an dessen Seitenwänden anliegenden Fortsatz 24. Durch diese Ausbildung wird erreicht, dass bei der Befestigung eines Gerätes an der Schraube 13, d.h. beim Anziehen einer Mutter auf dem Gewinde 14, die Stege 3 nicht gespreizt werden können. Damit kann die früher nötige U-Schiene weggelassen und daher Bauhöhe gewonnen werden.

Um ein Verschieben der Bride 12 in Längsrichtung des Profils 1 zu verhindern, hat die Bride 12 auf beiden Seiten ausgehend vom Randwulst 23 mindestens einen Quersteg 30 mit einer quer zur Längsrichtung der Bride 12 verlaufenden Eindrückkante 31. Die Stege 30 sind also dachförmig. Im dargestellten Ausführungsbeispiel sind sie pyramidenförmig mit der Pyramidenspitze am Rand des Randwulstes 23 und mit dem grössten Querschnitt anschliessend an den Fortsatz 24. Beidseits neben diesen Querstegen 30 ist in der Bride 12 je eine Ausnehmung 32 eingeformt. Durch diese Ausbildung wird erreicht, dass beim Anziehen einer Mutter auf der Schraube 13 die Kante 31 in der in Fig. 5 dargestellten Art in die Verdickung 8 eindringt. Das dabei verdrängte Material weicht in die Vertiefungen 32 aus. Damit entsteht eine formschlüssige Verbindung zwischen Bride 12 und Profil 1 in Profillängsrichtung. Dies ermöglicht eine hohe Belastbarkeit der Verbindung auch in dieser Richtung.

Um die Bride 12 vorgängig in einer bestimmten Position längs des Profils 1 arretieren zu können, hat sie parallel zur Bohrung 16 eine Gewindebohrung 35. In diese kann z.B. eine Madenschraube eingeschraubt werden, welche sich gegen den Grund der Nut 9 abstützt. Dies ist nicht nur vor der Erstmontage, sondern auch später beim Auswechseln eines Gerätes nützlich, weil dadurch die Bride 12 nicht unabsichtlich verschoben werden kann.

Um Spitzenspannungen in den Leisten 4 durch Kerbwirkung zu vermeiden, sind die Längswulste 23 an beiden Längsenden abgerundet.

**Patentansprüche**

1. Befestigungsvorrichtung bestehend aus einem von einem Aluminiumprofil (1) abstehenden C-Profilansatz (2) mit zwei längs eines Schlitzes (5) gegeneinander gekehrten Leisten (4), und aus einer in den C-Profilansatz (2) eingeschobenen Klemmbride (12) mit einem Gewinde (14) zum Anschrauben eines Gerätes, dadurch gekennzeichnet, dass die Leisten (4) gegen den Schlitz (5) hin auf der Innenseite (7) je eine Verdickung (8) aufweisen, dass die Klemmbride (12) beidseits einen die Verdickungen (8) hintergreifenden Längswulst (23) hat, und dass die Klemmbride (12) beidseitig je mindestens einen Quersteg (30) hat, der sich beim Anschrauben des Gerätes in die betreffende Leiste (4) einpresst.

2. Vorrichtung nach Anspruch 1, dadurch gekennzeichnet, dass die Leisten (4) und die Längswulste (23) keilförmig sind.

3. Vorrichtung nach Anspruch 1 oder 2, dadurch gekennzeichnet, dass die Klemmbride (12) beidseits der Querstege (30) je eine Vertiefung (32) aufweist.

4. Vorrichtung nach einem der Ansprüche 1 bis 3, dadurch gekennzeichnet, dass das Gewinde (14) durch eine durch eine Durchgangsbohrung (16) der Klemmbride (12) durchgesteckt Mehrkantschraube (13) gebildet ist, deren Kopf (15) in einer Mehrkantansenkung (18) der Klemmbride (12) drehfest sitzt.

5. Vorrichtung nach einem der Ansprüche 1 bis 4, dadurch gekennzeichnet, dass die Klemmbride (12) aus gesenkgeschmiedetem Metall, vorzugsweise aus Stahl besteht.

6. Vorrichtung nach einem der Ansprüche 1 bis 5, dadurch gekennzeichnet, dass parallel zum Gewinde (14) eine Gewindebohrung (35) kleineren Durchmessers in der Klemmbride (12) gebohrt ist zur Aufnahme einer Schraube zur Arretierung der Klemmbride (12) im C-Profilansatz (2).

7. Vorrichtung nach einem der Ansprüche 1 bis 6, dadurch gekennzeichnet, dass der Rand des Längswulstes (23) abgerundet ist.

8. Vorrichtung nach einem der Ansprüche 1 bis 7, dadurch gekennzeichnet, dass die Klemmbride (2) ausgehend von ihrer Mitte in Längsrichtung der Längswulste (23) beidseitig verjüngt ist.

9. Vorrichtung nach einem der Ansprüche 1 bis 8, dadurch gekennzeichnet, dass die Querstege (30) dachförmig ausgebildet sind.

10. Vorrichtung nach einem der Ansprüche 1 bis 9, dadurch gekennzeichnet, dass die Längswulste (23) an beiden Längsenden abgerundet sind.

Fig. 1

Fig. 2

Fig. 5

Fig. 3

Fig. 4

Europäisches
Patentamt

## EUROPÄISCHER RECHERCHENBERICHT

Nummer der Anmeldung

EP 91 81 0413

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | DE-U-8 701 973 (NIEDERHOLZ)(27-05-1987) * Seite 6, Zeile 31 - Seite 7, Zeile 17; Seite 11, Zeilen 8-24; Figuren 2,3 * | 1,2,4,5 ,7-10 | F 16 B 37/04 // B 61 D 17/04 |
| Y | --- | 3,6 | |
| Y | DE-B-1 119 059 (WARREN RUSSEL ATTWOOD)(07-12-1961) * Spalte 4, Zeilen 1-33; Figuren 1-3 * --- | 3 | |
| Y | BE-A- 543 795 (THORBERG)(14-01-1956) * Seite 1, Zeilen 18-29,48-52; Figuren 1-3 * --- | 6 | |
| A | GB-A-2 135 006 (BICC PUBLIC LTD CO.)(22-08-1984) * Figur 6 * ----- | 8 | |
| | | | **RECHERCHIERTE SACHGEBIETE (Int. Cl.5)** |
| | | | B 61 D B 62 D F 16 B |
| Der vorliegende Recherchenbericht wurde für alle Patentansprüche erstellt | | | |

| Recherchenort | Abschlußdatum der Recherche | Prüfer |
|---|---|---|
| DEN HAAG | 06-08-1991 | CALAMIDA G. |